# EUROPÄISCHE PATENTSCHRIFT

(11) **EP 1 473 822 B1**
(45) Veröffentlichungstag und Bekanntmachung des Hinweises auf die Patenterteilung: **17.10.2012**
(21) Anmeldenummer: 04006020.4
(22) Anmeldetag: 13.03.2004
(51) Int. Cl.: H02M 5/458

(54) **Stromrichterschaltungsanordnung und Verfahren zu deren Ansteuerung**
Power converter circuit and method for controlling the same
Circuit convertisseur de puissance et procédé pour commander célui-ci

(30) Priorität: 30.04.2003 DE 10319354
(43) Veröffentlichungstag der Anmeldung: 03.11.2004
(73) Patentinhaber: SEMIKRON Elektronik GmbH & Co. KG, 90431 Nürnberg (DE)
(72) Erfinder: Schreiber, Dejan, 90408 Nürnberg (DE)

(56) Entgegenhaltungen:
- DE-A1- 10 114 075
- GB-A- 2 285 523
- MWINYIWIWA B ET AL: "Multimodular multilevel converters with input/output linearity", CONFERENCE RECORD OF THE 1996 IEEE INDUSTRY APPLICATIONS CONFERENCE - 31ST IAS ANNUAL MEETING, IEEE SERVICE CENTER, US, Bd. 2, 6. Oktober 1996 (1996-10-06), Seiten 988-992, XP010201416, DOI: DOI:10.1109/IAS.1996.560202 ISBN: 978-0-7803-3544-8

## Beschreibung

Die Erfindung beschreibt eine Stromrichterschaltungsanordnung und ein Verfahren zu deren Ansteuerung beispielhaft für den Einsatz in einem Wechselrichter zwischen einem Generator mit dynamisch variierender Ausgangsleistung und einem Mittelspannungsstromnetz. Derartige dynamisch variierende Ausgangsleistungen treten beispielhaft bei Windenergieanlagen auf, da hier die abgegebene Leistung abhängig von der Windgeschwindigkeit ist. Die erzeugten Ströme werden typischerweise in Stromnetze mit bis zu einigen 10kV Spannung und Frequenzen von 50Hz oder 60Hz eingespeist.

Der Stand der Technik bei Anwendung wie Windenergieanlagen mit zeitlich variierender dynamischer Leistungsabgabe der Strom erzeugenden Generatoren wird gebildet durch folgende Technologien.

Für Leistungen der Stromerzeugung bis ca. 1 MW finden Generatoren mit Spannungen bis 690V Einsatz, damit liegt die Spannung im Zwischenkreis bzw. in der Gleichstromverbindung zum Wechselrichter bei ca. 1100V. In den zugehörigen Stromrichterschaltungen werden häufig IGBTs (insulated gate bipolar transistor) der Spannungsklassen 1200V bzw. 1700V als Leistungsschalter eingesetzt. Für höhere Leistungen sind diese Zwischenkreisspannungen von 1100V allerdings zu gering, da sich hier die Verluste, z.B. in den Verbindungsleitungen, überproportional erhöhen.

Daher werden bei Stromerzeugung mit Leistungen ab ca. 1 MW Mittelspannungsgeneratoren der genormten Spannungsklassen von 2,2kV, 3,3kV, 4,16kV und 6,3kV eingesetzt. Die hohen daraus resultierenden Zwischenkreisspannungen bedingen entweder hochsperrende Leistungsschalter wie IGBT oder IGCT (integrated gate kaskadierte, serielle Anordnung von Stromrichterzellen wie sie in der DE 101 14 075 A1 vorgeschlagen wird.

Ein vergleichbarer Sachverhalt ergibt sich für die Bauelemente des Eingangsgleichrichters. Eine bekannte Dimensionierungsregel besagt, dass für einen 400V Wechselstromeingang einer Drei- Phasen- Diodengleichrichterschaltung die Dioden der Spannungsklasse 1400V verwendet werden. Überträgt man nun derartige Dimensionierungsvorschriften auf Mittelspannungsgeneratoren, sind Einzeldioden einer Spannungsklasse einzusetzen, die nicht erhältlich sind. Daher werden für derartige Anwendungen Dioden einer geringeren Spannungsklasse in Reihe geschaltet. Damit die Sperrspannung über den einzelnen Dioden den Wert, der durch ihre Spannungsklasse vorgegeben ist, nicht überschreitet, sind hierbei aufwändige Beschaltungen beispielhaft mittels RC- Gliedern notwendig.

Aus der GB 2 285 523 A ist ein mit einem Wechselspannungssystem verbundener Multilevel-Stromrichter bekannt, der dem Oberbegriff des Anspruchs 1 entspricht.

Die vorliegende Erfindung hat die Aufgabe eine Stromrichterschaltungsanordnung vorzustellen mit einem Mittelspannungswechselstromeingang und unter Verwendung von Standardbauelementen kleinerer Spannungsklassen ohne aufwändige externe Beschaltung sowie ein Verfahren zur Ansteuerung einer derartigen Stromrichterschaltungsanordnung, wobei alle Phasen des Wechselspannungseingangs gleichmäßig und möglichst sinusförmig belastet werden.

Die Aufgabe wird gelöst durch eine Stromrichterschaltungsanordnung nach Anspruch 1. Bevorzugte Weiterbildungen finden sich in den Unteransprüchen. Eine Stromrichterschaltungsanordnung der erfinderischen Ausgestaltung umfasst folgende Komponente:
- einer Wechselspannungseingang,
- eine mehrphasige Gleichrichterschaltungsanordnung zur Umformung der Wechselspannung in eine Gleichspannung, sowie
- eine Serienschaltung von Kondensatoren zwischen den beiden Potentialen des Gleichspannungsausgangs des Gleichrichters.

Die erfindungsgemäße Gleichrichterschaltungsanordnung umfasst je Phase eine erste und eine zweite serielle Anordnung von Gleichrichterbauelementen. Im Mittelpunkt zwischen den Anoden und den Kathoden aller ersten Gleichrichterbauelemente sind jeweils die Kathoden der ersten Klemmdioden geschaltet. Im Mittelpunkt zwischen den Anoden und den Kathoden der zweiten Gleichrichterbauelemente sind jeweils die Anoden der zweiten Klemmdioden geschaltet. Weiterhin sind jeweils die Anoden der ersten Klemmdioden mit den Kathoden der zweiten Klemmdioden gleicher Ordnungszahl miteinander verbunden. Die Verbindungen gleicher Ordnungszahl aller Phasen sind ebenfalls miteinander und zusätzlich mit dem Mittelpunkt zwischen dem Kondensator gleicher und der nächsten Ordnungszahl verbunden. Die jeweilige Ordnungszahl ergibt sich durch abzählen der jeweiligen Bauelemente (siehe auch unten).

Vorteilhaft an dieser Ausgestaltung ist, dass einerseits keine weitere aufwändige externe Beschaltung notwendig ist, und dass andererseits die Kondensatoren bei o.g. Anwendungen als Eingangsgleichrichter für kaskadierte Stromrichterzellen bereits als Zwischenkreiskondensatoren vorhanden sind. Derartige Kondensatoren sind nach dem Stand der Technik für einen Mittelspannungsgleichspannungsausgang immer als Reihenschaltung anzuordnen, da entsprechende Bauelemente mit der geforderten Spannungsfestigkeit nicht erhältlich sind.

Die Kondensatoren sorgen durch ihre Anordnung in Reihe für eine definierte Spannungsteilung im Gleichspannungsausgang. Durch die Mittelanzapfung der Klemmdioden zwischen den Kondensatoren sorgen diese gleichzeitig für eine Begrenzung der über den ersten und zweiten Gleichrichterbauelementen abfallenden Spannung.

Bei der Verwendung der erfinderischen Stromrichterschaltungsanordnung in Windkraftanlagen ist die Eingangswechselspannung zeitlich dynamisch wechselnd und liegt zwischen 0V und einigen wenigen 10kV. Erfindungsgemäss, um alle Phasen des zugeordneten Generators gleichmäßig und möglichst sinusförmig zu belasten, weist jeder Kondensator einen parallel geschalteten Schalter auf. Diese werden durch eine übergeordnete Ansteuerung derart geschaltet, dass einerseits die nachgeordneten Stromrichterzellen gleichmäßig genutzt werden und andererseits die Eingangsquelle möglichst ideal belastet wird.

Als Gleichrichterbauelemente werden vorteilhafterweise Dioden oder Thyristoren oder nach dem Stand der Technik bekannte Kombinationen dieser eingesetzt. Thyristoren haben hierbei den weiteren Vorteil, dass im Einsatz in einer Windkraftanlage bei Ausfall des zu speisenden Netzes die gesamte Stromrichterschaltung vom Generator getrennt werden kann.

Die Erfindung wird anhand von Ausführungsbeispielen in Verbindung mit den Fig. 1 bis 5 näher erläutert.

Die Erfindung wird anhand von Ausführungsbeispielen in Verbindung mit den Fig. 1 bis 5 naher erläutert.
- Fig. 1: zeigt eine Umrichterschaltungsanordnung nach dem Stand der Technik.
- Fig. 2: zeigt eine Stromrichterschaltungsanordnung.
- Fig. 3: zeigt eine erfindungsgemäße Stromrichterschaltungsanordnung in einem DreiPhasen- Wechselstromumrichter.
- Fig. 4: zeigt die Belastung eines Wechselspannungseingangs einer ungeregelten DreiPhasen- Gleichrichterschaltung.
- Fig. 5: zeigt die Belastung eines Wechselspannungseingangs unter Verwendung des erfindungsgemäßen Verfahrens zur Ansteuerung einer erfindungsgemäßen Stromrichterschaltungsanordnung.

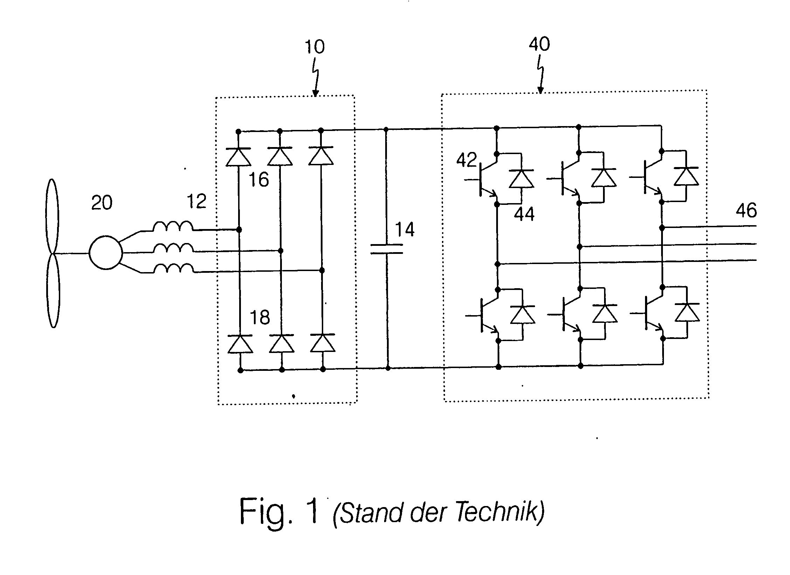

Fig. 1 zeigt eine Wechselstromumrichterschaltungsanordnung für Windkraftanlagen nach dem Stand der Technik. Diese besteht aus einer Synchronmaschine als Wechselspannungsgenerator (20). Der hierin erzeugte und über Drosseln geführte Strom bildet den Eingangsstrom für den Drei- Phasen- Gleichrichter (10). Dieser besteht je Phase aus einem ersten Gleichrichterbauelement, hier einer Diode (16), und aus einem zweiten Gleichrichterbauelement, ebenfalls einer Diode (18). Alternativ sind nach dem Stand der Technik auch Thyristoren als Gleichrichterbauelemente bekannt und werden eingesetzt, wenn eine elektrische Trennung vom Generator möglich sein soll. Dem Drei- Phasen-Gleichrichter nachgeschaltet und den Gleichstromzwischenkreis des Umrichters bildend ist ein Kondensator (14). Der nachgeschaltete Wechselrichter, eine Drei- Phasen-Brückenschaltung, erzeugt aus der Gleichspannung des Zwischenkreises an seinem Ausgang (46) eine dreiphasige Wechselspannung.

Die Drei- Phasen- Brückenschaltung (40) ihrerseits besteht je Phase aus einem ersten und einem zweiten Leistungsschalter (42), welcher vorzugsweise als IGBT (insulated gate bipolar transistor) ausgebildet ist, sowie einer antiparallel zum jeweiligen Schalter geschalteten Freilaufdiode (44) oder jeweils einer Mehrzahl dieser Bauelemente in Parallelschaltung.

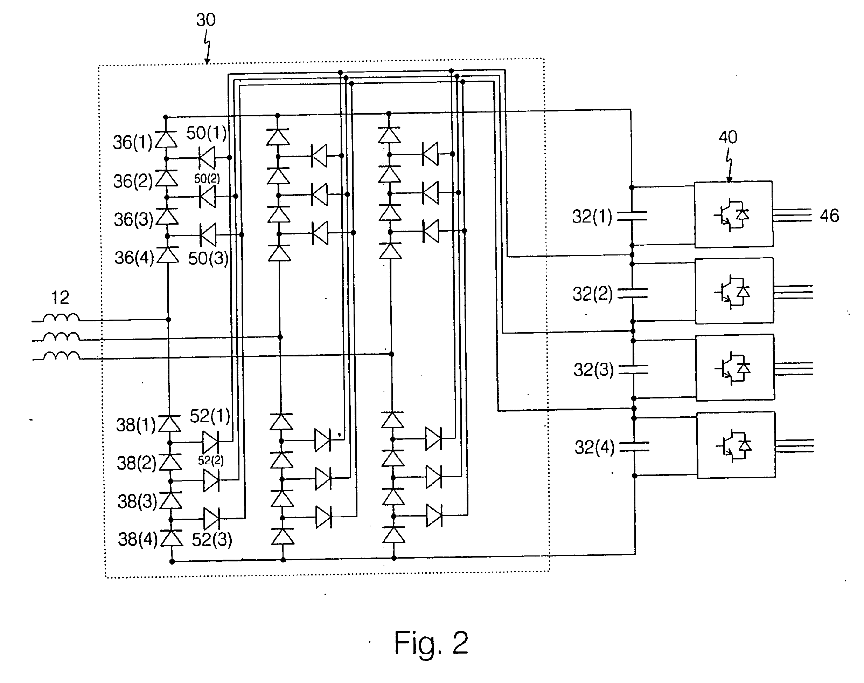

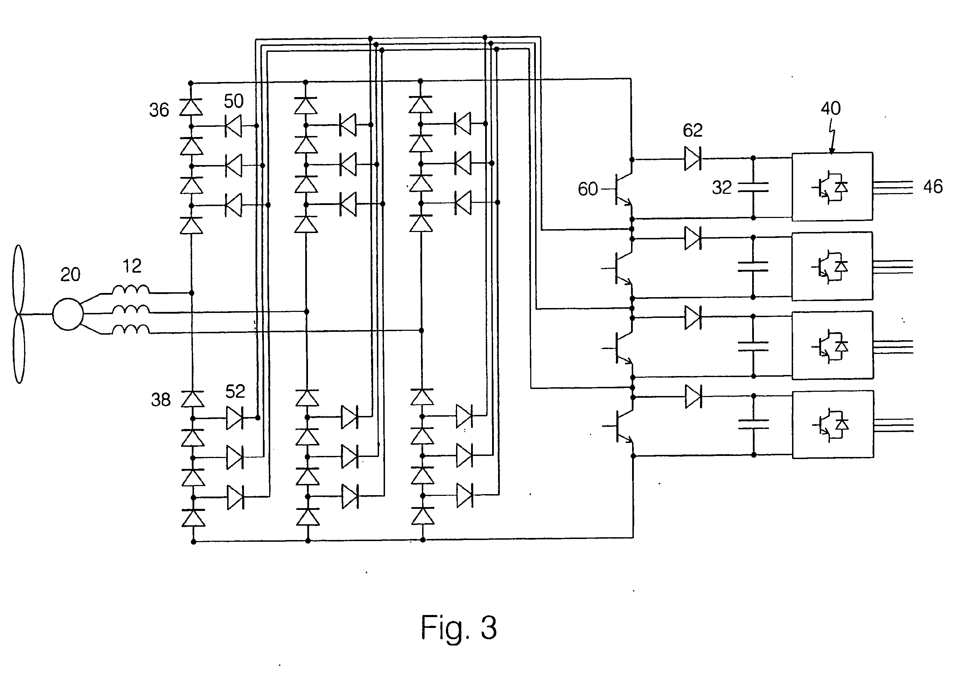

Fig. 2 zeigt eine Stromrichterschaltungsanordnung für eine dreiphasige Eingangsspannung (12) im Mittelspannungsbereich bestehend aus einer mehrphasigen Gleichrichterschaltungsanordnung (30) zur Umformung der Eingangswechselspannung in eine Gleichspannung sowie einer Serienschaltung von vier Kondensatoren (32(1) bis 32(4)) zwischen den beiden Potentialen des Gleichspannungsausgangs. Die Gleichrichterschaltungsanordnung (30) besteht je Phase aus einer ersten seriellen Anordnung von Dioden (36) und einer zweiten seriellen Anordnung von Dioden (38). Hierbei bildet die Kathode der ersten Diode (36(1)) das positive Potential des Gleichspannungsausgangs. Die zweite Diode (36(2)) ist mit ihrer Kathode mit der Anode der ersten Diode (36(1)) verbunden. In analoger Weise sind die weiteren beiden Dioden (36(3), 36(4)) angeordnet. Die Zahlen hinter den Bezugszeichen bestimmen die jeweilige Ordnungszahl der Bauelemente, diese Nomenklatur gilt analog auch für alle weiteren Bauelemente der Fig. 2 und 3.

Die Dioden (38(1) bis 38(4)) der zweiten Anordnung von Dioden sind analog der ersten angeordnet, wobei hier die Anode der vierten Diode (38(4)) das negative Potential des Gleichspannungsausgangs bildet.

Zwischen den Anoden und den Kathoden der ersten Dioden (36(1) bis 36(4)) ist jeweils eine erste Klemmdiode (50(1) bis 50(3)) derart angeordnet, dass ihre Kathoden mit dem jeweiligen Mittelpunkt zwischen den Dioden verbunden sind. In analoger Weise ist zwischen den Anoden und den Kathoden der zweiten Dioden (38(1) bis 38(4)) jeweils eine zweite Klemmdiode (52(1) bis 52(3)) derart angeordnet, das ihren Anoden mit dem jeweiligen Mittelpunkt zwischen den Dioden verbunden sind.

Die Anoden der ersten und die Kathoden der zweiten Klemmdioden jeweils gleicher Ordnungszahl sind miteinander verbunden, beispielhaft die erste Klemmdiode (50(1)) mit der zweiten Klemmdiode (52(1 )). Diese Verbindungen der Klemmdioden der jeweiligen Ordnungszahl sind mit den entsprechenden Verbindungen aller weiteren Phasen der Gleichrichterschaltungsanordnung (30) verbunden. Somit sind alle Klemmdioden (50, 52) gleicher Ordnungszahl miteinander verbunden. Weiterhin sind die Verbindungen der jeweiligen Ordnungszahl mit dem Mittelpunkt zwischen dem Kondensator gleicher und der nächsten Ordnungszahl verbunden. Beispielhaft sind somit alle Anoden der ersten Klemmdioden (50(2)) mit den Kathoden der zweiten Klemmdioden (52(2)) und dem Mittelpunkt zwischen den Kondensatoren (32(2) und 32(3)) verbunden.

Die Kondensatoren (32) bilden die Zwischenkreiskondensatoren für kaskadierte Stromrichterzellen (40, vgl. Fig. 1) nach dem Stand der Technik. Die nachfolgende Tabelle gibt ein Dimensionierungsbeispiel des somit entstehenden Wechselstromumnchters.

| | |
|---|---|
| Eingangsspannung an (12) - Scheitelwert der verketten Spannung | 4000V |
| Spannungsklasse der Dioden (36, 38) | 1700V |
| Spannungsklasse der Klemmdioden (50, 52) | 1700V |
| Zwischenkreisspannung (gesamt) | 4000V |
| Spannung über jedem Kondensator (32) | 1000V |
| Spannungsklasse der IGBTs und Freilaufdioden in (40) | 1700V |
| Ausgangsspannung der jeweiligen Brückenschaltung (40) | 3 x 660V |

Fig. 3 zeigt eine erfindungsgemäße Stromrichterschaltungsanordnung in einem Drei-Phasen- Wechselstromumrichter einer Windkraftanlage. Am Eingang (12) liegt hier die durch den windbetriebenen Generator (20) erzeugte Eingangsspannung an. Diese weist hierbei aufgrund der nicht konstanten Anregung einen zeitlich dynamisch wechselnden Verlauf auf und liegt zwischen 0V und 4000V (Scheitelwert der verketteten Spannung). Nachgeschaltet ist die erfindungsgemäße Gleichrichterschaltungsanordnung (30), wie sie zu Fig. 2 ausführlich beschrieben wurde.

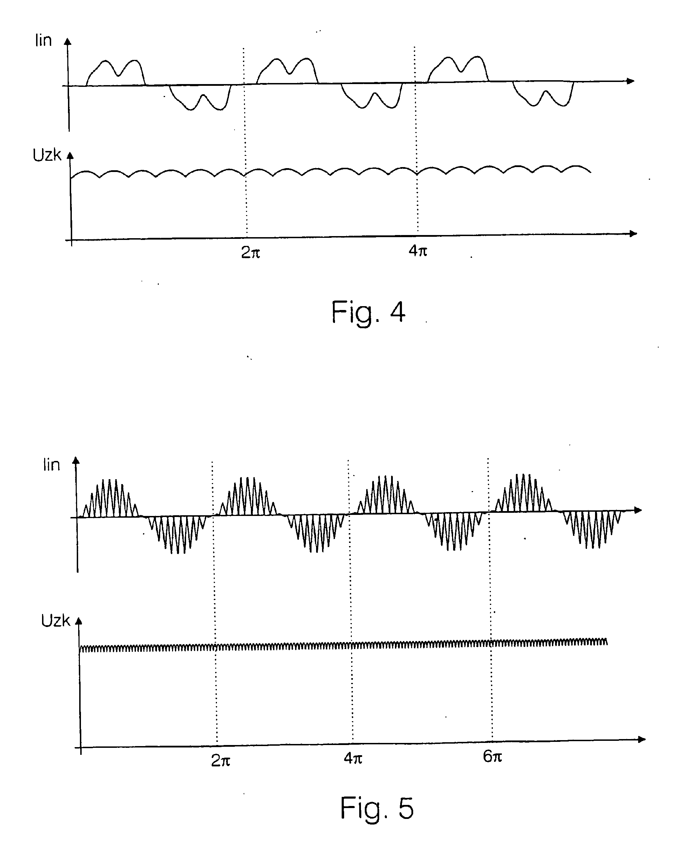

Die Stromrichterschaltungsanordnung weist weiterhin Schalter (60) sowie eine Diode (62) auf, wobei diese Schalter den jeweiligen Kondensatoren (32) parallel geschaltet sind und die jeweilige Diode (62) zwischen dem Kollektor des Schalters (60) und dem Kondensator (32) geschaltet ist. Diese Schalter können in eingeschaltetem Zustand die ihnen zugeordneten Kondensatoren und die diesen nachgeordneten Drei- Phasen-Brückenschaltungen (40) überbrücken. Somit kann eine übergeordnete Steuerung nun abhängig von der Eingangsspannung diese Brückenschaltungen beliebig aktivieren oder deaktivieren. Die jeweilige Schalterstellung wirkt weiterhin über die Klemmdioden (50, 52) auf den Verlauf der Eingangsspannung zurück. Durch geeignete Wahl der Schalterstellung können nun alle Phasen des zugeordneten Generators (20) gleichmäßig und annähernd sinusförmig belastet werden. Zudem kann durch die geeignete Wahl der Schaltzustände der Gleichspannungsausgang konstant und, in Grenzen, unabhängig von der Eingangspannung gehalten werden (siehe auf Fig. 5).

Fig. 4 zeigt die Belastung einer Phase des Wechselspannungseingangs einer ungeregelten Drei- Phasen- Gleichrichterschaltung. Dargestellt ist im oberen Teil der Stromverlauf (lin) einer Eingangsphase, die beiden anderen Eingangsphasen sind identisch, nur um jeweils 120 Grad verschoben. Die Belastung aller drei Phasen ist identisch, allerdings weicht die Form der Kurve deutlich von einem gewünschten sinusförmigen Verlauf ab. Im unteren Teil ist die Ausgangsgleichspannung des Eingangsgleichrichters aufgetragen. Diese schwankt um den Mittelwert von ca. 1,35 x Vin (Eingangsspannung).

Fig. 5 zeigt die Belastung eines Wechselspannungseingangs unter Verwendung des erfindungsgemäßen Verfahrens zur Ansteuerung einer erfindungsgemäßen Stromrichterschaltungsanordnung. Bei dieser Ausgestaltung des erfindungsgemäßen Verfahrens werden je zwei der vier Schalter (60, Fig. 3) gleichzeitig mit einer Frequenz von 1 kHz angesteuert, geöffnet bzw. geschlossen. Die beiden weiteren Schalter werden in gleicher Weise angesteuert allerdings phasenverschoben um eine viertel Periode. Die Hüllkurve des Stromverlaufs einer exemplarisch dargestellten Eingangsphase ist annähernd sinusförmig. Bei einer höheren Schaltfrequenz der Schalter (60) nähert sich dieser Spannungsverlauf immer besser dem gewünschten sinusförmigen Verlauf an. Die Belastung der jeweiligen Phasen ist selbstverständlich identisch.

Durch ein geeignetes Tastverhältnis der Ansteuerung der Schalter (60) kann bei unterschiedlichen Eingangsspannungen die Gleichspannung des Ausgangs konstant gehalten werden. Weiterhin kann durch geeignete Wahl der Phasenverschiebung der Ansteuerung sowie des Tastverhältnisses der einzelnen Schalter (60) die Qualität der Generatorströme gesteuert werden.

Bei dem erfinderischen Verfahren ist die Gleichspannung des Ausgangssignals mit einer Welligkeit vom Sechsfachen der Schaltfrequenz der Schalter (60) beaufschlagt, wie im unteren Teil dargestellt. Dies hat allerdings keinen negativen Einfluss auf die Funktion der nachgeschalteten Stromrichtermodule (40, Fig. 3).

## Patentansprüche

1. Stromrichterschaltungsanordnung bestehend aus einem Wechselspannungseingang (12), einer mehrphasigen Gleichrichterschaltungsanordnung (30) zur Umformung der Wechselspannung in eine Gleichspannung sowie einer Serienschaltung von Kondensatoren (32) zwischen den beiden Potentialen des Gleichspannungsausgangs, wobei
die Gleichrichterschaltungsanordnung (30) je Phase besteht aus einer ersten seriellen Anordnung von Gleichrichterbauelementen (36), einer zweiten seriellen Anordnung von Gleichrichterbauelementen (38), und wobei zwischen den Anoden und den Kathoden der ersten Gleichrichterbauelemente (36) jeweils die Kathoden von ersten Klemmdioden (50) geschaltet sind und zwischen den Anoden und den Kathoden der zweiten Gleichrichterbauelemente (38) jeweils die Anoden von zweiten Klemmdioden (52) geschaltet sind und die Anoden der ersten Klemmdioden (50) jeder Phase mit den Kathoden der zweiten Klemmdioden (52) gleicher Ordnungszahl verbunden sind und diese Verbindungen gleicher Ordnungszahl aller Phasen miteinander und mit dem Mittelpunkt zwischen dem Kondensator (32) gleicher und der nächsten Ordnungszahl verbunden sind, **dadurch gekennzeichnet,**
**dass** den Kondensatoren (32) je ein Schalter (60) parallel geschaltet ist und je eine Diode (62) zwischen den jeweiligen Kollektoren des Schalters (60) und des zugeordneten Kondensators (32) geschaltet ist.

2. Stromrichterschaltungsanordnung nach Anspruch 1, wobei
die Gleichrichterbauelemente Dioden oder Thyristoren oder eine geeignete Kombination aus Dioden und Thyristoren sind.

3. Stromrichterschaltungsanordnung nach Anspruch 1, wobei
die Kondensatoren (32) die Zwischenkreiskondensatoren eines Stromrichtermoduls (40) sind.

4. Verfahren zur Ansteuerung einer Stromrichterschaltungsanordnung nach Anspruch 1, wobei die Schalter (60) mit einer derartigen Frequenz und einem geeigneten Tastverhältnis geschaltet werden, dass sich eine gleichmäßige sinusförmige Strombelastung des Wechselspannungseingangs ergibt.

## Claims

1. A power converter circuit arrangement, consisting of an a.c. voltage input (12), a multi-phase rectifier circuit arrangement (30) for converting the a.c. voltage into a d.c. voltage and a series circuit of capacitors (32) between the two potentials of the d.c. voltage output,
wherein
the rectifier circuit arrangement (30) consists of a first series arrangement of rectifier components (36) and a second series arrangement of rectifier components (38) per phase, and wherein the cathodes of first clamp diodes (50) are in each case connected between the anodes and the cathodes of the first rectifier components (36), and the anodes of second clamp diodes (52) are in each case connected between the anodes and the cathodes of the second rectifier components (38), and the anodes of the first clamp diodes (50) of each phase are connected to the cathodes of the second clamp diodes (52) of the same ordinal number, and these connections of the same ordinal number of all phases are connected to each other and to the midpoint between the capacitors (32) of the same and the next ordinal number, **characterised**
**in that** a switch (60) is in each case connected in parallel to the capacitors (32) and a diode (62) is in each case connected between the respective collectors of the switch (60) and the associated capacitor (32).

2. The power converter circuit arrangement according to Claim 1, wherein
the rectifier components are diodes or thyristors or a suitable combination of diodes and thyristors.

3. The power converter circuit arrangement according to Claim 1, wherein
the capacitors (32) are the intermediate circuit capacitors of a power converter module (40).

4. A method for controlling a power converter circuit arrangement according to Claim 1,
wherein the switches (60) are switched at a suitable duty cycle and at such a frequency that a uniform sinusoidal current load of the a.c. voltage input is produced.

## Revendications

1. Montage de circuit convertisseur constitué d'une entrée de courant alternatif (12), d'un montage de circuit redresseur (30) polyphasé pour la transformation du courant alternatif en courant continu, ainsi que d'un montage en série de condensateurs (32) entre les deux potentiels de la sortie de courant continu,
le montage de circuit redresseur (30) étant composé pour chaque phase d'un premier montage en série de composants de redresseur (36) et d'un deuxième montage en série de composants de redresseur (38), les cathodes de premières diodes de verrouillage (50) étant montées entre les anodes et les cathodes des premiers composants de redresseur (36), et les anodes de deuxièmes diodes de verrouillage (52) étant montées entre les anodes et les cathodes des deuxièmes composants de redresseur (38), les anodes des premières diodes de verrouillage (50) de chaque phase étant reliées aux cathodes des deuxièmes diodes de verrouillage (52) de même rang et ces connexions de même rang de toutes les phases étant reliées entre elles et au point central entre le condensateur (32) de même rang et de rang suivant,
**caractérisé en ce qu'**un commutateur (60) est monté en parallèle à chaque condensateur (32), et **en ce qu'**une diode (62) est montée entre les collecteurs respectifs du commutateur (60) et du condensateur (32) correspondant.

2. Montage de circuit convertisseur selon la revendication 1, où
les composants de redresseur sont des diodes ou des thyristors, ou une combinaison adéquate de diodes et de thyristors.

3. Montage de circuit convertisseur selon la revendication 1, où
les condensateurs (32) sont les condensateurs de circuit intermédiaire d'un module de convertisseur (40).

4. Procédé de commande d'un montage de circuit convertisseur selon la revendication 1, où les commutateurs (60) sont commutés avec un taux d'impulsions approprié et à une fréquence telle qu'il en résulte une charge électrique sinusoïdale homogène pour l'entrée de courant alternatif.
